(19) Europäisches Patentamt
European Patent Office
Office européen des brevets

(11) **EP 1 061 244 B1**

(12) **EUROPEAN PATENT SPECIFICATION**

(45) Date of publication and mention
of the grant of the patent:
**13.10.2004 Bulletin 2004/42**

(51) Int Cl.[7]: **F02D 41/02**, F01N 3/08,
F01N 3/20

(21) Application number: **00111918.9**

(22) Date of filing: **14.06.2000**

(54) **Exhaust gas purifying apparatus for internal combustion engine**

Abgasreinigungsvorrichtung für eine Brennkraftmaschine

Dispositif d'épuration de gaz d'échappement pour moteur à combustion interne

(84) Designated Contracting States:
**DE FR**

(30) Priority: **14.06.1999 JP 16743399**

(43) Date of publication of application:
**20.12.2000 Bulletin 2000/51**

(73) Proprietor: **HONDA GIKEN KOGYO KABUSHIKI KAISHA**
**Minato-ku Tokyo (JP)**

(72) Inventor: **Takanohashi, Toshikatsu**
**Wako-shi, Saitama (JP)**

(74) Representative: **HOFFMANN - EITLE**
**Patent- und Rechtsanwälte**
**Arabellastrasse 4**
**81925 München (DE)**

(56) References cited:
**EP-A- 0 773 057        EP-A- 0 773 354**
**EP-A- 0 802 315**

**Description**

BACKGROUND OF THE INVENTION

1. Field of the Invention

The present invention relates to an exhaust gas purifying apparatus that is incorporated into an exhaust system, for an internal combustion engine, that includes a three-way catalyst, a nitrogen oxide (NOx) purifying apparatus, and a NOx removal catalyst that uses ammonia to reduce NOx.

2. Description of the Related Art

It is known that when an air-fuel ratio is set richer than the theoretical air-fuel ratio, a three-way catalyst, which is incorporated into an exhaust system to purify the exhaust gas produced by an internal combustion engine, generates ammonia ($NH_3$), using as a material the NOx contained in the exhaust gas. Further, an exhaust gas purifying apparatus is conventionally known wherein a NOx removal catalyst, which is located downstream of the three-way catalyst and which uses ammonia generated by the three-way catalyst to reduce NOx, reduces the NOx generated during a lean operation for which the air-fuel ratio is set leaner than the theoretical air-fuel ratio (JP-A-10-2219/ EP-A-0 802 315).

This publication further discloses a method in that a NOx purifying device incorporating a NOx absorbent therin is jointly located with a three-way catalyst and a NOx removal catalyst. In order to reduce the NOx absorbed by the NOx purifying device, a lean air-fuel ratio mixture is set to supply fuel to one part of a plurality of cylinders, and a rich air-fuel ratio mixture is set to supply fuel to the remaining cylinders. In addition, a rich spike operation (NOx reduction rich operation) is performed to provide an overall, average air-fuel ratio that is richer than the theoretical air-fuel ratio, and to ensure that the ammonia generated by the three-way catalyst is effectively employed for the reduction of NOx.

However, according to the method disclosed in the publication, a constant execution time is set as the NOx reduction increase time for the reduction of the NOx absorbed by the NOx absorbent. Certain factors, such as the volume of the ammonia that is generated by the three-way catalyst and the volume of the ammonia that is absorbed by the NOx removal catalyst, are not taken into account. Therefore, the execution time for the NOx reduction rich operation is inappropriate and the NOx reduction rich operation may be performed longer than is necessary, or it may be terminated before the reduction of NOx has been completed.

SUMMARY OF THE INVENTION

It is an object of the present invention to provide an exhaust gas purifying apparatus and a corresponding method that effectively employ the ammonia generated by a three-way catalyst to reduce NOx which has been absorbed by a NOx purifying device, and to appropriately control the execution time for an increase in the reduction of NOx so as to prevent an increase in the consumption of fuel.

The above object is solved by an apparatus as defined in claim 1 and a method as defined in claim 6. Further embodiments of the present invention are defined in the dependent claims.

According to the present invention, an exhaust gas purifying apparatus for an internal combustion engine, comprises:

a three-way catalyst, which is incorporated into an exhaust system for an internal combustion engine that has a plurality of cylinders;
NOx purifying means, which is located downstream of said three-way catalyst, for absorbing NOx when an exhaust gas is lean;
a NOx removal catalyst, which is located downstream of said three-way catalyst, for absorbing ammonia contained in said exhaust gas and using said ammonia for the reduction of NOx; and
air-fuel ratio control means for performing a NOx reduction rich operation, in that during a full-cylinder lean operation which sets the air-fuel ratio of a mixture to be supplied to all of said cylinders leaner than the theoretical air-fuel ratio, the air-fuel ratio of a mixture to be supplied to one part of said cylinder is set leaner than said theoretical air-fuel ratio and the air-fuel ratio of a mixture to be supplied to the remaining cylinders is set richer than said theoretical air-fuel ratio when the volume of NOx absorbed by said NOx purifying means equals or exceeds a permissive value or the volume of ammonia absorbed by said NOx removal catalyst equal to or is smaller than a predetermined value, and an average air-fuel ratio for all of said cylinders is richer than said theoretical air-fuel ratio;

wherein said air-fuel ratio control means terminates said NOx reduction rich operation when said volume of ammonia absorbed by said NOx removal catalyst is saturated and substantially all of said NOx absorbed by said NOx disposal means has been reduced.

The "permissible value" is set, for example, to a value slightly smaller than the maximum volume of the NOx that can be absorbed by the NOx disposal means, or to 1/2 of the maximum value with an allowance. The "predetermined value" is set to a value slightly larger than 0 in order to determine whether the volume of ammonia absorbed by the NOx removal catalyst has been reduced until it is substantially 0.

With this arrangement, during the full-cylinder lean operation, for which the air-fuel ratio of the mixture to be supplied to all the cylinders is set leaner than the theoretical air-fuel ratio, when the volume of NOx absorbed by the NOx disposal means equals or exceeds a permissible value, or when the volume of the ammonia absorbed by the NOx removal catalyst equals or is smaller than the predetermined value, the NOx reduction rich operation is performed, so that the air-fuel ratio of the mixture to be supplied to one part of the cylinders is set leaner than the theoretical air-fuel ratio, so that the air-fuel ratio of the mixture to be supplied to the remaining cylinders is set richer than the theoretical air-fuel ratio, and so that the average air-fuel ratio for all the cylinders is set richer than the theoretical air-fuel ratio. Therefore, the generation of ammonia by the three-way catalyst is enhanced, and the NOx absorbed by the NOx disposal means can be effectively reduced. Further, during the NOx reduction rich operation, when the NOx removal catalyst has been saturated with ammonia, and substantially all the NOx absorbed by the NOx disposal means has been reduced, the NOx reduction rich operation is terminated. As a result, the NOx reduction rich operation can be satisfactorily performed, and an increase in fuel consumption or the deterioration of the exhaust gas characteristic can be prevented.

It is preferable that the air-fuel control means include monitoring means for monitoring the generation of ammonia by the three-way catalyst during a NOx reduction rich operation, and that the NOx reduction rich operation be terminated when the monitoring means determines that the volume of the ammonia generated equals the volume required to saturate the NOx removal catalyst and to substantially reduce all of the NOx absorbed by the NOx disposal means.

BRIEF DESCRIPTION OF THE DRAWINGS

In the accompanying drawings:

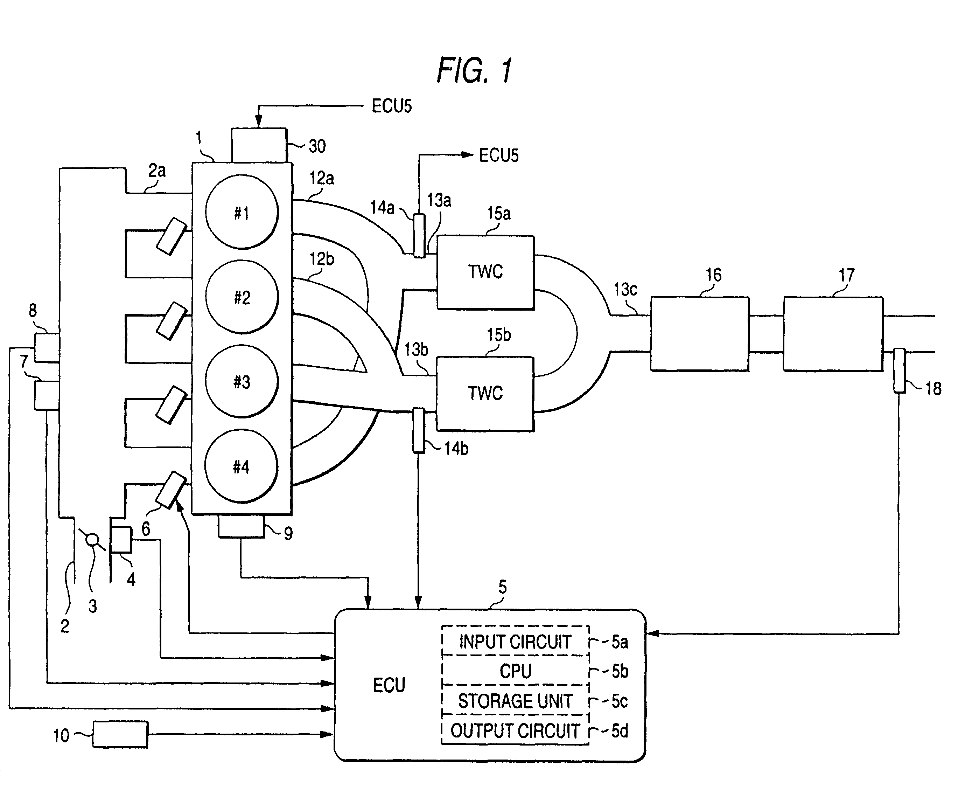

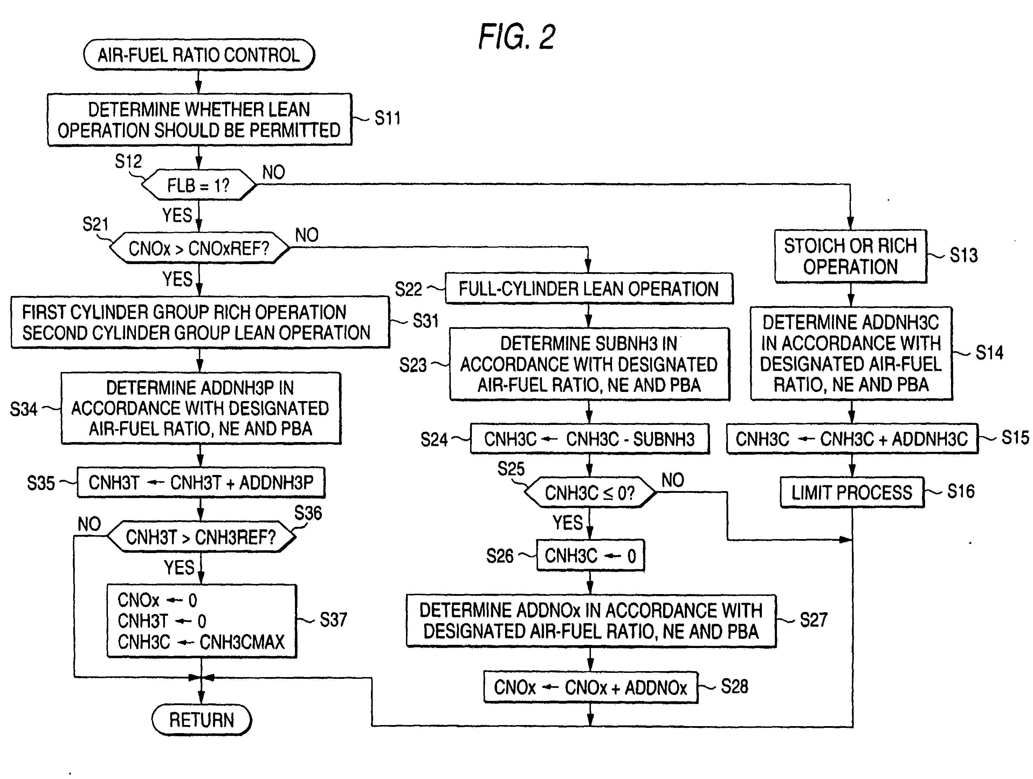

Fig. 1 is a diagram illustrating the arrangement of an internal combustion engine and its controller, and includes an exhaust gas purifying apparatus according to one embodiment of the invention; and Fig. 2 is a flowchart showing the air-fuel ratio control processing.

PREFERRED EMBODIMENTS OF THE INVENTION

The preferred embodiments of the present invention will now be described while referring to the accompanying drawings.

Fig. 1 is a diagram illustrating the overall arrangement of an internal combustion engine (hereinafter referred to simply as an engine) and a controller, therefor, that includes an exhaust gas disposal device according to one embodiment of the invention. The engine 1 has four cylinders #1 to #4, and an intake pipe 2 communicates, via intake manifolds 2a, with the combustion chambers of the cylinders #1 to #4. Positioned along the intake pipe 2 is a throttle valve 3 to which a throttle valve travel (θTH) sensor 4 is connected. To control the engine 1, an electric signal corresponding to the throttle valve 3 travel sensed by the throttle valve travel sensor 4 is output to an electronic control unit (hereinafter referred to as an "ECU") 5.

Fuel injection valves 6, one for each cylinder, are located slightly upstream of the intake valves (not shown) for the intake manifolds 2a. Each fuel injection valve 6 is connected to a fuel pump (not shown), and is electrically connected to the ECU 5, so that the travel time for each fuel injection valve 6 is controlled in accordance with a signal output by the ECU 5.

An absolute internal intake pipe pressure (PBA) sensor 7 and an intake temperature (TA) sensor 8 are provided downstream of the throttle valve 3, and detection signals output by these sensors, 7 and 8, are transmitted to the ECU 5.

An engine water temperature (TW) sensor 9 mounted on the main body of the engine 1 is constituted by, for example, a thermistor. The TW sensor 9 detects an engine water temperature (cooling water temperature) TW, and outputs it to the ECU 5.

A crankshaft angle position sensor 10, which is so located that it can detect the rotational angle of the crankshaft (not shown) of the engine 1, transmits a signal corresponding to the rotational angle of the crankshaft to the ECU 5. The crankshaft position angle sensor 10 includes: a cylinder identification sensor for outputting a signal pulse (hereinafter referred to as a "CYL signal pulse") at a predetermined crankshaft angle for the location of a specific cylinder of the engine 1; a TDC sensor for outputting a top dead center (TDC) signal pulse at the crankshaft position angle (each 180° a four-cylinder engine) that corresponds to a predetermined angle before the TDC position at which the intake stroke for each of the cylinders is started; and a CRK sensor for generating a pulse (hereinafter referred to as a "CRK signal pulse") corresponding to a constant crankshaft angle (e.g., every 30°) for a cycle that is shorter than that for the TDC signal pulse. The CYL signal pulse, the TDC signal pulse and the CRK signal pulse, which are all transmitted to the ECU 5, are used to control various timings, such as the fuel injection timing and the ignition timing, and to detect the engine revolutions NE.

The combustion chambers of the cylinders #1 and #4 of the engine 1 are connected via an exhaust manifold 12a to a first exhaust pipe 13a, while the combustion chambers of the cylinders #2 and #3 are connected via an exhaust manifold 12b to a second exhaust pipe 13b. The first and the second exhaust pipes 13a and 13b merge and communicate with a third exhaust pipe 13c.

Linear air-fuel ratio sensors (hereinafter referred to as "LAF sensors") 14a and 14b, and three-way catalysts 15a and 15b are positioned in numerical order, beginning upstream, along the first and the second exhaust pipes 13a and 13b, respectively. One function of the three-way catalysts 15a and 15b, when the air-fuel ratio of the fuel mixture supplied to the engine 1 is set so that it is near the theoretical air-fuel ratio, is the effective oxidization of HC and CO in the exhaust gases and the reduction of the NOx, and a second function, when the air-fuel ratio is set so that it is richer than the theoretical air-fuel ratio, is the use of the NOx in the exhaust gases for the generation of ammonia ($NH_3$). The LAF sensors 14a and 14b output, to the ECU 5, an electric signal that is substantially proportional to the oxygen density (air-fuel ratio) of the exhaust gases.

A NOx removal catalyst 16 and a NOx purifying device 17 are provided in the named order, beginning upstream, along the third exhaust pipe 13c.

The NOx removal catalyst 16 is formed by carrying one of the metals copper Cu, chrome Cr, platinum Pt and palladium Pd on a carrier. To facilitate the absorption of ammonia, Zeolite or silica alumina ($SiO_2 \cdot Al_2O_3$) is used as the carrier. One function of the NOx removal catalyst 16 is the absorption of ammonia, and another function is the use of ammonia to facilitate the reduction of NOx (NOx removal reaction for the separation of nitrogen).

The NOx purifying device 17 includes an NOx absorbent for absorbing NOx and a catalyst for promoting oxidization and reduction. The NOx absorbent can be either an occlusion or an absorbent type. The occlusion type absorbs NOx in a lean exhaust-gas condition, wherein the air-fuel ratio of the mixture supplied to the engine 1 is set leaner than the theoretical air-fuel ratio and wherein the oxygen density of the exhaust gases is comparatively high (the gases contain much NOx), and discharges NOx that has been absorbed in a rich exhaust-gas condition, wherein the air-fuel ratio of the mixture to be supplied to the engine 1 is set so that it equals or exceeds the theoretical air fuel-ratio and wherein the oxygen density of the exhaust gases is comparatively low. The adsorption type absorbs NOx in a lean exhaust-gas condition, and reduces NOx in a rich exhaust-gas condition. The NOx purifying device 17 is so designed that in a lean exhaust-gas condition NOx is absorbed by the NOx absorbent, while in a rich exhaust-gas condition NOx is released by the NOx absorbent and is reduced by HC and CO and discharged as a nitrogen gas, and the HC and CO are oxidized and are discharged as steam and dioxide. Ballium oxide (BaO), for example, is used as a NOx absorbent of an occlusion type, while sodium (Na) and titanium (Ti) or strontium (Sr) and titanium (Ti) are employed as a NOx absorbent of an adsorption type. A noble metal, such as rhodium (Rh), palladium (Pd) or Platinum (Pt), is employed as a catalyst for the occlusion or adsorption type.

When the amount of NOx absorbed equals the absorption capacity of the NOx absorbent, i.e., the maximum NOx absorption volume, no more NOx can be absorbed. Therefore, the air-fuel ratio is increased, i.e., a reduction rich operation is performed, in order to discharge the NOx as needed for reduction.

An oxygen density sensor 18 located downstream of the NOx purifying device 17 outputs a detection signal to the ECU 5. The oxygen density sensor 18 having a characteristic that its output is drastically changed in the vicinity of the theoretical air-fuel ratio, has a high level output when the air-fuel ratio is richer than the theoretical air-fuel ratio, and a low level output when the air-fuel ratio is leaner.

The engine 1 has a valve timing switching mechanism 30 for switching between two levels the timings for the intake valves and the exhaust valves: a high-speed valve timing which is appropriate for a high-speed rotational period of the engine 1, and a low-speed valve timing which is appropriate for a low-speed rotational period. The selection of the valve timing also includes the selection of the valve lifting distance. When the low-speed rotation valve timing is selected, one of the two intake valves is halted in order to ensure stable combustion, even when the air-fuel ratio is set leaner than the theoretical air-fuel ratio.

The valve timing switching mechanism 30 selects the valve timing using hydraulics, and a solenoid and a hydraulic sensor for the hydraulic selection are connected to the ECU 5. The detection signal output by the hydraulic sensor is transmitted to the ECU 5, and the ECU 5 controls the solenoid and selects the valve timing that is consonant with the operating state of the engine 1.

The ECU 5 includes an input circuit 5a for shaping the signal waveforms received from various sensors, for correcting the voltage level to a predetermined level, and for converting an analog signal into a digital signal; a central processing unit (hereinafter referred to as a "CPU") 5b; storage unit 5c for storing various programs executed by the CPU 5b and tables and maps used for the programs and calculation results; and an output circuit 5d for transmitting a drive signal to the fuel injection valve 6.

The CPU 5b determines the operating state of the engine 1 in accordance with the various engine parameter signals described above, and employs equation (1) to calculate, in accordance with the operating state, the fuel injection time TOUT for the fuel injection valve 6 that is opened in synchronization with the TDC signal pulse.

$$TOUT = TI \times KCMD \times KLAF \times K1 + K2 \qquad (1).$$

TI denotes the basic fuel injection time for the fuel injection valve 6, and is determined by searching the TI map that is set in accordance with the engine revolutions NE and the absolute internal intake pipe pressure PBA. The TI map is so set that, in the operating state for the map that corresponds to the engine revolutions NE and the absolute internal intake pipe pressure PBA, the air-fuel ratio of the mixture to be supplied to the engine is substantially equals the theoretical air-fuel ratio.

KCMD denotes a target air-fuel ratio coefficient, and is defined in accordance with engine operating parameters, such as the engine revolutions NE, the absolute internal intake pipe pressure PBA and the engine water temperature TW. Since the target air-fuel ratio coefficient KCMD is proportional to the reciprocal of the air-fuel ratio A/F, i.e., the fuel-air ratio F/A, and at the theoretical air-fuel ratio has a value of 1.0, the coefficient KCMD is also called a target equivalence ratio.

KLAF denotes an air-fuel ratio compensation coefficient that is calculated under PID control, so that the equivalence ratio KACT, which is obtained from detection values output by the LAF sensors 14a and 14b, matches the target equivalence ratio KCMD. In this embodiment, a different target equivalence ratio may be set for each cylinder, and in this case, the target equivalence ratio KCMD is set for each cylinder. Further, when the valve travel time is calculated for the fuel injection valves 6 of cylinders #1 and #4, the air-fuel ratio compensation coefficient KLAF is obtained based on the output of the LAF sensor 14a. When the valve travel time is calculated for the fuel injection valves 6 of cylinders #2 and #3, the air-fuel ratio compensation coefficient KLAF is obtained based on the output of the LAF sensor 14b.

K1 and K2 denote another compensation coefficient and a compensation variable that are obtained in accordance with various engine parameter signals, and which are determined to be preset values, so that various characteristics, such as the fuel consumption characteristics and engine acceleration characteristics that are consonant with the engine operating state, are optimized.

Fig. 2 is a flowchart for the air-fuel ratio control processing that is performed by the CPU 5b at a constant time interval.

At step S11, based on the engine operating state, a check is performed to determine whether the lean operation should be permitted for which the air-fuel ratio is set leaner than the theoretical air-fuel ratio. When a lean operation is permitted, a lean operation flag FLB is set to "1," and when a lean operation is not permitted, the lean operation flag FLB is set to "0." Thereafter, a check is performed to determine whether the lean operation flag FLB is set to "1" (step S12). When the flag FLB is set to "0" and the lean operation is not permitted (e.g., during rapid acceleration or while warming up), the target air-fuel ratio coefficient KCMD is set to 1.0 or greater, and a stoich or a rich operation is performed (step S13).

When a rich operation is performed, ammonia is generated by the three-way catalysts 15a and 15b, and one part of the ammonia is used by the NOx removal catalyst 16 for NOx reduction, while the other part is absorbed by the NOx removal catalyst 16. At steps S14 to S16, therefore, the process for monitoring the volume of ammonia absorbed by the NOx removal catalyst 16 is performed. And since, during the stoich or the rich operation, only a little NOx is discharged downstream of the three-way catalysts 15a and 15b, the volume of the ammonia used for NOx reduction is ignored. At step S14, an increment value ADDNH3C that is to be used at step S15 is determined in accordance with the designated air-fuel ratio, i.e., the target air-fuel ratio coefficient KCMD, the engine revolutions NE, and the absolute internal intake pipe pressure PBA.

The increment value ADDNH3C is a parameter that corresponds to the unit hour volume of the ammonia that is absorbed by the NOx removal catalyst 16 during a rich operation. As the engine revolutions NE and the absolute internal intake pipe pressure PBA are increased, so too is the increment value ADDNH3C. Since the volume of ammonia generated by the three-way catalysts 15a and 15b changes, depending on the designated air-fuel ratio, to obtain the increment value ADDNH3C, a value calculated in accordance with the engine revolutions NE and the absolute internal intake-pipe pressure PBA is corrected by using a compensation coefficient KNH3R that is defined in advance in accordance with the designated air-fuel ratio. When the air-fuel ratio is equal to or smaller than 14, the ratio (generation ratio) at which ammonia is generated using the NOx that flows into the three-way catalysts 15a and 15b is substantially constant. Thus, as the air-fuel ratio increases, the volume of NOx discharged from the engine 1 is reduced, so that the volume of the ammonia that is generated is reduced. Therefore, the compensation coefficient KNH3R is so set that it is reduced as the target air-fuel ratio coefficient KCMD is increased. It should be noted that in the range extending from the air-fuel ratio of 14 to the theoretical air-fuel ratio of 14.7, the ratio (production ratio) for the generation of ammonia using Nox is reduced as the air-fuel ratio is increased, and at the theoretical air-fuel ratio is 0. Therefore, at the theoretical air-fuel ratio the compensation coefficient KNH3R is set to 0; rises as the air-fuel ratio increases; reaches its maximum at a predetermined air-fuel ratio ranging from 14.7 to 14; and drops as the air-fuel ratio progressively exceeds the predetermined ratio.

At step S15, the increment value ADDNH3C determined at step S14 is employed for the following equation, and the value of counter CNH3C for the ammonia that is absorbed is incremented. Thus, a count value that corresponds to the volume of the ammonia absorbed by the NOx removal catalyst 16 is obtained.

$$CNH3C = CNH3C + ADDNH3C.$$

At step S16, a limiting process is performed that sets the value of the counter CNH3C to the maximum value CNH3CMAX when the counter value CNH3C exceeds the maximum CNH3CMAX. Thereafter, the processing is terminated.

When, at step S12, the flag FLB is set to "1" and a lean operation is permitted, a check is performed to determine whether the value of a Nox counter CNOx, which is obtained at step S28 and which represents the volume of NOx absorbed by the Nox disposal device 17, exceeds a permissible value CNOxREF. The permissible value CNOxREF is set to a value that corresponds to a NOx volume that is slightly smaller than the maximum NOx absorption capacity of the NOx absorbent, or, with an allowance, is set to a value that corresponds to about 1/2 the maximum NOx absorption capacity. Namely, the CNOxREF is so set that (about 1/2 the maximum NOx absorption capacity of the NOx absorbent) $\leq$ CNOxREF < (the maximum NOx absorption capacity of the NOx absorbent).

When the decision at step S21 is NO, i.e., when CNOx $\leq$ CNOxREF, a full-cylinder lean operation is performed in which the air-fuel ratio of the mixture to be supplied for all the cylinders is set leaner than the theoretical air-fuel ratio (for example, the target air-fuel ratio coefficient KCMD is set to a value equivalent to an air-fuel ratio of 20) (step S22).

During the full-cylinder lean operation, ammonia is not generated by the three-way catalysts 15a and 15b, and ammonia that was absorbed by the NOx removal catalyst 16 reacts with the NOx. Therefore, the ammonia that was absorbed by the NOx removal catalyst 16 is reduced, and when all the ammonia has been lost from the NOx removal catalyst 16, the NOx passed through the NOx removal catalyst 16 is readily absorbed by the NOx purifying device 17. At steps S23 to S28, the value obtained by the absorbed ammonia counter CNH3C is decremented, and when it equals 0, the counter CNOx for the NOx that has been absorbed is incremented.

First, at step S23, a decrement value SUBNH3C, which is to be used at step S24, is determined in accordance with the designated air-fuel ratio, the engine revolutions NE and the absolute internal intake-pipe pressure PBA. The decrement value SUBNH3C is a parameter corresponding to the unit hour volume of ammonia that is discharged by the NOx removal catalyst 16 (it is used to record the NOx/ammonia reaction) during a full-cylinder lean operation. As the count of the engine revolutions NE and the absolute internal intake-pipe pressure PBA rises, the decrement value SUBNH3C increases. The decrement value SUBNH3C corresponds to the volume of ammonia used to reduce the NOx that is discharged during a lean operation, and changes in consonance with the volume of the exhaust NOx. Since the volume of the exhaust can be determined in accordance with the designated air-fuel ratio, to obtain the decrement value SUBNH3C, a value calculated in accordance with the engine revolutions NE and the absolute internal intake-pipe pressure PBA is corrected by using a compensation coefficient KNH3L, which is defined in advance in accordance with a designated air-fuel ratio.

At step S24, the decrement value SUBNH3C determined at step S23 is employed for the following equation, and the value of the counter CNH3C for the ammonia that has been absorbed is decremented. As a result, a count value that corresponds to the volume of the ammonia that has been absorbed (that remains) in the NOx removal catalyst 16 can be obtained.

$$CNH3C = CNH3C - SUBNH3C$$

At step S25, a check is performed to determine the whether the value of the counter CNH3C is equal to or smaller than 0. When CNH3C > 0, the processing is immediately terminated. When CNH3C $\geq$ 0, the value of the counter CNH3C is set to "0" (step S26). And at step S27, in order to monitor the volume of NOx absorbed by the NOx purifying device 17, an increment value ADDNOx that is to be used at step S28 is determined in accordance with the designated air-fuel ratio, the engine revolutions NE and the absolute internal intake-pipe pressure PBA. The increment value ADDNOx is a parameter corresponding to the unit hour volume of the NOx that is discharged downstream of the three-way catalysts 15a and 15b during a full-cylinder lean operation. And the increment value ADDNOx increases as the engine revolutions NE and the absolute internal intake-pipe pressure PbA rise. Since the increment value ADDNOx changes in accordance with the designated air-fuel ratio, to obtain the increment value ADDNOx, in the same manner as that used for the decrement SUBNH3C, a value calculated in accordance with the engine revolutions NE and the absolute internal intake-pipe pressure PBA is corrected by using a compensation coefficient KNNOx, which is defined in advance in accordance with the designated air-fuel ratio.

At step S28, the increment value ADDNOx determined at step S27 is employed for the following equation, and the value of the NOx counter CNOx is incremented. As a result, a count value can be obtained corresponding to the volume of the NOx that has been absorbed by the NOx absorbent of the NOx purifying device 17.

$$CNOx = CNOx + ADDNOx$$

When the full-cylinder lean operation is continued, the volume of the NOx absorbed by the NOx absorbent is increased. And when at step S21 CNOx > CNOxREF, the reduction rich processing at step S31 is performed in order to discharge and to reduce the NOx that has been absorbed by the NOx absorbent. In this embodiment, the cylinders #1 and #2 are defined as a first cylinder group, while the cylinders #3 and #4 are defined as a second cylinder group. A rich operation is performed while the air-fuel ratio set for the first cylinder group is a rich air-fuel ratio of approximately 13, and a lean operation is performed while the air-fuel ratio set for the second cylinder group is a lean air-fuel ratio of approximately 15 (hereinafter referred to as a "partial cylinder rich operation"). Therefore, much NOx, which is the material that is used for the production of ammonia, is discharged from the cylinders during the lean operation, and the average air-fuel ratio of all the cylinders (the lean operating cylinders and the rich operating cylinders) is richer than the theoretical air-fuel ratio of 14. As a result, the ammonia generation ratio for the three-way catalysts 15 and 15b can be increased, and the volume of the ammonia that is generated can also be increased.

At step S34, in order to monitor the volume of the ammonia that is generated, an increment value ADDNH3P, which is to be used at step S35, is determined in accordance with the engine revolutions NE and the absolute internal intake-pipe pressure PBA. The increment value ADDNH3P is a parameter corresponding to the unit hour volume of the ammonia that is generated by the three-way catalysts 15 and 15b during a partial cylinder rich operation. Also, as the count of the engine revolutions NE and the absolute internal intake-pipe pressure PBA rise, the increment value ADDNH3P increases. And while the increment value ADDNH3P changes, in accordance with the designated air-fuel ratio, the designated air-fuel ratio remains constant during the reduction rich operation, so that a value corresponding to that air-fuel ratio can be set in advance.

At step S35, the increment value ADDNH3P, which is determined at step S34, is employed for the following equation, and the value of the generated ammonia counter CNH3T is incremented. As a result, a count value that corresponds to the volume of the ammonia generated by the three-way catalysts 15a and 15b can be obtained.

$$CNH3T = CNH3T + ADDNH3P.$$

At step S36, a check is performed to determine whether the value of the counter CNH3T exceeds the reference value CNH3REF. The reference value CNH3REF is set to a value corresponding to the volume of ammonia generated by the three-way catalysts 15a and 15b that is required to saturate the NOx removal catalyst 16, and to reduce almost all the NOx that is absorbed by the NOx purifying device 17. Therefore, at step S36, the exact time can be obtained whereat the NOx removal catalyst 16 will be saturated, and the NOx absorbed by the NOx purifying device 17 will be substantially reduced.

When the decision at step S36 is NO, the processing is immediately terminated, and the reduction rich operation is continued. When CNH3T > CNH3TREF, the value of the NOx counter CNOx and the value of the generated ammonia counter CNH3T are set to "0," and the value of the absorbed ammonia counter CNH3C is set to the maximum value (corresponding to the saturated state) CNHCMAX (step S37). The processing is thereafter terminated.

When the process at step S37 is performed, the decision at step S21 is NO, and the operating state is returned to the full-cylinder lean operation.

As is described above, according to this embodiment, the air-fuel ratio for the first cylinder group is set richer than the theoretical air-fuel ratio, and the air-fuel ratio for the second cylinder group is set leaner than the theoretical air-fuel ratio. In addition, the average air-fuel ratio for the cylinders #1 and #4 and the average air-fuel ratio for the cylinders #2 and #3 are set richer than the theoretical air-fuel ratio. Therefore, the generation of ammonia by the three-way catalysts 15a and 15b is facilitated, and the ammonia can be effectively used to reduce the NOx absorbed by the NOx absorbent. Further, in this embodiment, the amount of ammonia generated during the reduction rich operation is monitored, and to terminate the reduction rich operation, a precise time is determined whereat the ammonia absorbed by the NOx removal catalyst 16 is saturated and almost all the NOx absorbed by the NOx absorbent has been reduced. Therefore, the execution time for the reduction and the increase will be satisfactory, and an increase in the fuel consumption or the deterioration of the exhaust gas characteristic can be prevented.

In this embodiment, the processing in Fig. 2 that is performed by the CPU 5b corresponds to the air-fuel ratio control unit, and the processes at steps S32 to S37 correspond to the monitoring unit.

The present invention, however, is not limited to this embodiment, and can be variously modified. For example, while a four-cylinder internal combustion engine has been employed for this embodiment, the present invention can be applied for an internal combustion engine of at least two cylinders.

In the above embodiment, the first exhaust pipe 13a for cylinders #1 and #4 and the second exhaust pipe 13b for cylinders #2 and #3 are provided, and the three-way catalysts 15a and 15b are respectively arranged along the two exhaust pipes. However, the exhaust manifolds 12a and 12b may be merged to provide a single exhaust pipe, and one three-way catalyst, one NOx removal catalyst and one NOx purifying device may be located downstream along the pipe assembly.

The NOx removal catalyst 16 and the NOx purifying device 17 may be invertedly positioned. That is, the NOx purifying device 17 may be located upstream of the NOx removal catalyst 16. In this case, when a full-cylinder lean operation is initiated, first, NOx is absorbed by the NOx purifying device 17, and when the device 17 is saturated, NOx is reduced by ammonia accumulated in the NOx removal catalyst 16. Therefore, the reduction rich operation will be started when the further absorption of ammonia by the NOx removal catalyst 16 is substantially 0. That is, the saturation of the NOx purifying device 17 is detected by the NOx counter CNOx, the value of the counter CHN3C for the ammonia absorbed by the NOx removal catalyst 16 is decremented, and before CNH3C = 0 (when the volume of the ammonia that has been absorbed has dropped until it is equal to lower than a predetermined value), the reduction rich operation is begun. The end condition for the reduction rich operation is the same as is described above in the embodiment.

As is described above in detail, according to the preset invention, during the full-cylinder lean operation wherein the air-fuel ratio of the mixture to be supplied to all the cylinders is set leaner than the theoretical air-fuel ratio, when the volume of the NOx absorbed by the NOx disposal means equals the permissible value, or when the volume of the ammonia absorbed by the NOx removal catalyst falls until it is equal to or lower than a predetermined value, a NOx reduction rich operation is performed, so that the air-fuel ratio of the mixture to be supplied to one part of the cylinders is set leaner than the theoretical air-fuel ratio, and so that the average air-fuel ratio for all the cylinders is set rich. The generation of ammonia by the three-way catalysts is promoted, and the NOx absorbed by the NOx disposal means can be quickly reduced. Further, when during the NOx reduction increase operation the ammonia absorbed by the NOx removal catalyst is saturated and substantially all the NOx absorbed by the NOx disposal means has been reduced, the NOx reduction rich operation is terminated. Therefore, the NOx reduction rich operation can be satisfactorily performed, and an increase in the fuel consumption, or the deterioration of the exhaust gas characteristic can be prevented.

**Claims**

1. An exhaust gas purifying apparatus for an internal combustion engine, comprising:

   a three-way catalyst (15a, b), which is incorporated into an exhaust system for an internal combustion engine (1) that has a plurality of cylinders (#1-4);
   NOx purifying means (17), which is located downstream of said three-way catalyst, for absorbing NOx when an exhaust gas is lean;
   a NOx removal catalyst (16), which is located down stream of said three-way catalyst, for absorbing ammonia contained in said exhaust gas and using said ammonia for the reduction of NOx; and
   air-fuel ratio control means for performing a NOx reduction rich operation, in that during a full-cylinder lean operation which sets the air-fuel ratio of a mixture to be supplied to all of said cylinders leaner than the theoretical air-fuel ratio, the air-fuel ration of a mixture to be supplied to one part of said cylinder is set leaner than said theoretical air-fuel ratio and the air-fuel ratio of a mixture to be supplied to the remaining cylinders is set richer than said theoretical air-fuel ratio when the volume of NOx absorbed by said NOx purifying means equals or exceeds a permissive value or the volume of ammonia absorbed by said NOx removal catalyst is equal to or is smaller than a predetermined value, and an average air-fuel ration for all of said cylinders is richer than said theoretical air-fuel ratio;

   **characterized in that** said air-fuel ratio control means terminates said NOx reduction rich operation when said volume of ammonia absorbed by said NOx removal catalyst is saturated and substantially all of said NOx absorbed by said NOx purifying means has been reduced.

2. The exhaust gas purifying apparatus according to claim 1, wherein said air-fuel control means include first monitoring means for monitoring generation of ammonia by the three-way catalyst during a NOx reduction rich operation; and
   further wherein the NOx reduction rich operation is terminated when said first monitoring means determines that the volume of the ammonia generated equals the volume required to saturate the NO removal catalyst and to substantially reduce all of the NOx absorbed by the NOx purifying means.

3. The exhaust gas purifying apparatus according to claim 1 or 2, wherein the permissive value is in the range of about 1/2 the maximum NOx absorption capacity of the NOx absorbing means to less than the maximum NOx absorption capacity of the NOx absorbing means.

4. The exhaust gas purifying apparatus according to any one of claims 1 to 3, wherein said NOx purifying means (17) is located downstream of said NOx removal catalyst (16).

5. The exhaust gas purifying apparatus according to any one of claims 1 to 3, wherein said NOx removal catalyst (16) is located downstream of said NOx purifying means (17).

6. A method for purifying the exhaust gas of an internal combustion engine comprising a three-way catalyst (15a, b), which is incorporated into an exhaust system for an internal combustion engine (1) that has a plurality of cylinders (#1-4);
   NOx purifying means (17), which is located downstream of said three-way catalyst, for absorbing NOx when an exhaust gas is lean;
   a NOx removal catalyst (16), which is located down stream of said three-way catalyst, for absorbing ammonia contained in said exhaust gas and using said ammonia for the reduction of NOx; the method comprising the steps of performing a NOx reduction rich operation, in that during a full-cylinder lean operation which sets the air-fuel ratio of a mixture to be supplied to all of said cylinders leaner than the theoretical air-fuel ratio, the air-fuel ration of a mixture to be supplied to one part of said cylinder is set leaner than said theoretical air-fuel ratio and the air-fuel ratio of a mixture to be supplied to the remaining cylinders is set richer than said theoretical air-fuel ratio when the volume of NOx absorbed by said NOx purifying means equals or exceeds a permissive value or the volume of ammonia absorbed by said NOx removal catalyst is equal to or is smaller than a predetermined value, and an average air-fuel ration for all of said cylinders is richer than said theoretical air-fuel ratio; and

terminating said NOx reduction rich operation when said volume of ammonia absorbed by said NOx removal catalyst is saturated and substantially all of said NOx absorbed by said NOx purifying means has been reduced.

## Patentansprüche

1. Abgasreinigungsvorrichtung für einen Verbrennungsmotor, umfassend:

einen in ein Abgassystem für einen Verbrennungsmotor (1), der mehrere Zylinder (#1-4) aufweist, integrierten Dreiwege-Katalysator (15a, b);

eine NOx Reinigungseinrichtung (17) zum Absorbieren von NOx, wenn das Abgas mager ist, die dem Dreiwege-Katalysator nachgeschaltet angeordnet ist;

einen NOx Entfernungskatalysator (16) zum Absorbieren von in dem Abgas enthaltenem Ammoniak und zur Verwendung des Ammoniaks für die Reduktion von NOx, der dem Dreiwege-Katalysator nachgeschaltet angeordnet ist; und

eine Luft-Kraftstoffverhältnis-Regeleinrichtung zum durchführen eines NOx Reduktion-Fettbetriebs, bei dem während einem Gesamtzylinder-Magerbetrieb, der das Luft-Kraftstoffverhältnis einer allen Zylindern zuzuführender Mischung magerer als das theoretische Luft-Kraftstoffverhältnis festlegt, das Luft-Kraftstoffverhältnis einer einem Teil der Zylinder zuzuführender Mischung magerer als das theoretische Luft-Kraftstoffverhältnis festgelegt wird und das Luft-Kraftstoffverhältnis einer den verbleibenden Zylindern zuzuführender Mischung fetter als das theoretische Luft-Kraftstoffverhältnis festgelegt wird, wenn das Volumen des durch die NOx Reinigungseinrichtung absorbierte NOx einem zulässigen Wert entspricht oder diesen überschreitet oder wenn das Volumen von durch den NOx Entfernungskatalysator entferntem Ammoniak einem vorbestimmten Wert entspricht oder kleiner als dieser ist und ein Durchschnitts-Luft-Kraftstoffverhältnis für alle der Zylinder ist fetter als das theoretische Luft-Kraftstoffverhältnis;

**dadurch gekennzeichnet, dass** die Luft-Kraftstoffverhältnis-Regeleinrichtung den NOx Reduktion-Fettbetrieb beendet, wenn das durch den NOx Entfernungskatalysator absorbierte Ammoniakvolumen gesättigt ist und im wesentlichen das gesamte durch die NOX Reinigungseinrichtung absorbierte NOx reduziert wurde.

2. Abgas-Reinigungsvorrichtung nach Anspruch 1, bei der die Luft-Kraftstoffregeleinrichtung eine erste Überwachungseinrichtung zum Überwachen der Erzeugung von Ammoniak durch den Dreiwegekatalysator während eines NOx Reduktion-Fettbetriebs enthält; und bei der ferner der NOx Reduktions-Fettbetrieb abgeschlossen wird, wenn die erste Überwachungseinrichtung feststellt, dass das erzeugte Ammoniakvolumen dem Volumen entspricht, das notwendig ist, um den NOx Entfernungskatalysator zu sättigen und im wesentlichen das gesamte durch die NOx Reinigungseinrichtung absorbierte NOx zu reduzieren.

3. Abgas-Reinigungsvorrichtung nach Anspruch 1 oder 2, bei der der zulässige Wert in einem Bereich von ungefähr ½ der maximalen NOx Absorptionskapazität der NOx Absorptionseinrichtung bis weniger als die maximale NOx Absorptionskapazität der NOx Absorptionseinrichtung liegt.

4. Abgas-Reinigungsvorrichtung nach einem der Ansprüche 1 bis 3, bei der die NOx Reinigungseinrichtung (17) dem NOx Entfernungskatalysator (16) nachgeschaltet angeordnet ist.

5. Abgas-Reinigungsvorrichtung nach einem der Ansprüche 1 bis 3, bei der der NOx Entfernungskatalysator (16) der NOx Reinigungseinrichtung (17) nachgeschaltet angeordnet ist.

6. Verfahren zum Reinigen des Abgases eines Verbrennungsmotors mit einem Dreiwege-Katalysator (15a, b), der in ein Abgassystem für einen Verbrennungsmotor (1), der mehrere Zylinder (#1-4) aufweist, integriert ist;
einer NOx Reinigungseinrichtung (17) zum Absorbieren von NOx, wenn das Abgas mager ist, die dem Dreiwege-Katalysator nachgeschaltet angeordnet ist;

einem NOx Entfernungskatalysator (16) zum Absorbieren von in dem Abgas enthaltenem Ammoniak und zum Verwenden des Ammoniaks für die Reduktion von NOx, der dem Dreiwege-Katalysator nachgeschaltet angeordnet ist; wobei das Verfahren die Schritte umfasst:

Durchführen eines NOx Reduktion-Fettbetriebs, bei dem während einem Gesamtzylinder-Magerbetrieb, der das Luft-Kraftstoffverhältnis einer zu allen Zylindern zugeführter Mischung magerer als das theoretische Luft-Kraftstoffverhältnis festlegt, das Luft-Kraftstoffverhältnis einer einem Teil der Zylinder zugeführter Mischung magerer als das theoretische Luft-Kraftstoffverhältnis festgelegt wird und das Luft-Kraftstoffverhältnis einer den verbleibenden Zylindern zugeführter Mischung fetter festgelegt wird als das theoretische Luft-Kraftstoffverhältnis, wenn das durch die NOx Reinigungseinrichtung absorbierte NOx Volumen einem zulässigen Wert entspricht oder diesen überschreitet oder wenn das durch den NOx Entfernungskatalysator absorbierte Ammoniakvolumen einem vorbestimmten Wert entspricht oder geringer als dieser ist und wobei ein Durchschnitts-Luft-Kraftstoffverhältnis für alle Zylinder fetter als das theoretische Luft-Kraftstoffverhältnis ist; und

Abschließen des NOx Reduktions-Fettbetriebs, wenn das durch den NOx Entfernungskatalysator absorbierte Ammoniakvolumen gesättigt ist und im wesentlichen das gesamte durch die NOx Reinigungseinrichtung absorbierte NOx reduziert wurde.

## Revendications

1. Dispositif d'épuration de gaz d'échappement pour un moteur à combustion interne, comprenant :

un catalyseur à trois voies (15a, b), qui est incorporé dans un système d'échappement pour un moteur à combustion interne (1) qui possède une pluralité de cylindres (n° 1 à 4) ;
un moyen d'épuration de NOx (17), qui est situé en aval dudit catalyseur à trois voies, pour absorber le NOx lorsqu'un gaz d'échappement est pauvre ;
un catalyseur d'élimination de NOx (16), qui est situé en aval dudit catalyseur à trois voies, pour absorber l'ammoniac contenu dans ledit gaz d'échappement et pour utiliser ledit ammoniac pour la réduction du NOx ; et
un moyen de contrôle du rapport air/carburant pour effectuer une opération riche en réduction de NOx, dans laquelle durant une opération pauvre sur tous les cylindres qui fixe le rapport air/carburant d'un mélange à fournir à chacun desdits cylindres à une valeur plus pauvre que le rapport air/carburant théorique, le rapport air/carburant d'un mélange à fournir à une partie dudit cylindre est fixé à une valeur plus pauvre que ledit rapport air/carburant théorique, et le rapport air/carburant d'un mélange à fournir aux autres cylindres est fixé à une valeur plus riche que ledit rapport air/carburant théorique lorsque le volume de NOx absorbé par ledit moyen d'épuration de NOx est égal à ou dépasse une valeur permise, ou que le volume d'ammoniac absorbé par ledit catalyseur d'élimination de NOx est égal ou inférieur à une valeur prédéterminée, et qu'un rapport air/carburant moyen pour chacun desdits cylindres est plus riche que ledit rapport air/carburant théorique ;

**caractérisé en ce que** ledit moyen de contrôle du rapport air/carburant met fin à ladite opération riche en réduction de NOx lorsque ledit volume d'ammoniac absorbé par ledit catalyseur d'élimination de NOx est saturé et que pratiquement la totalité dudit NOx absorbé par ledit moyen d'épuration de NOx a été réduite.

2. Dispositif d'épuration de gaz d'échappement selon la revendication 1, dans lequel ledit moyen de contrôle du rapport air/carburant comprend un premier moyen de surveillance pour surveiller la génération d'ammoniac par le catalyseur à trois voies durant une opération riche en réduction de NOx ; et
dans lequel, également, l'opération riche en réduction de NOx prend fin lorsque ledit premier moyen de surveillance détermine que le volume d'ammoniac généré est égal au volume requis pour saturer le catalyseur d'élimination de NOx et pour réduire pratiquement la totalité du NOx absorbé par le moyen d'épuration de NOx.

3. Dispositif d'épuration de gaz d'échappement selon la revendication 1 ou 2, dans lequel la valeur permise est dans la plage située entre environ la moitié de la capacité maximale d'absorption de NOx du moyen d'absorption de NOx et moins de la capacité maximale d'absorption de NOx du moyen d'absorption de NOx.

4. Dispositif d'épuration de gaz d'échappement selon l'une quelconque des revendications 1 à 3, dans lequel ledit moyen d'épuration de NOx (17) est situé en aval dudit catalyseur d'élimination de NOx (16).

5. Dispositif d'épuration de gaz d'échappement selon l'une quelconque des revendications 1 à 3, dans lequel ledit catalyseur d'élimination de NOx (16) est situé en aval dudit moyen d'épuration de NOx (17).

6. Procédé pour épurer le gaz d'échappement d'un moteur à combustion interne comprenant un catalyseur à trois voies (15a, b), qui est incorporé dans un système d'échappement pour un moteur à combustion interné (1) qui possède une pluralité de cylindres (n° 1 à 4) ;

un moyen d'épuration de NOx (17), qui est situé en aval dudit catalyseur à trois voies, pour absorber le NOx lorsqu'un gaz d'échappement est pauvre ;

un catalyseur d'élimination de NOx (16), qui est situé en aval dudit catalyseur à trois voies, pour absorber l'ammoniac contenu dans ledit gaz d'échappement et pour utiliser ledit ammoniac pour la réduction du NOx ; le procédé comprenant les étapes consistant à effectuer une opération riche en réduction de NOx, dans laquelle durant une opération pauvre sur tous les cylindres qui fixe le rapport air/carburant d'un mélange à fournir à chacun desdits cylindres à une valeur plus pauvre que le rapport air/carburant théorique, le rapport air/carburant d'un mélange à fournir à une partie dudit cylindre est fixé à une valeur plus pauvre que ledit rapport air/carburant théorique et le rapport air/carburant d'un mélange à fournir aux autres cylindres est fixé à une valeur plus riche que ledit rapport air/carburant théorique lorsque le volume de NOx absorbé par ledit moyen d'épuration de NOx est égal à ou dépasse une valeur permise, ou que le volume d'ammoniac absorbé par ledit catalyseur d'élimination de NOx est égal ou inférieur à une valeur prédéterminée, et qu'un rapport air/carburant moyen pour chacun desdits cylindres est plus riche que ledit rapport air/carburant théorique ; et

mettant fin à ladite opération riche en réduction de NOx lorsque ledit volume d'ammoniac absorbé par ledit catalyseur d'élimination de NOx est saturé et que pratiquement la totalité dudit NOx absorbé par ledit moyen d'épuration de NOx a été réduite.

FIG. 1

## FIG. 2

AIR-FUEL RATIO CONTROL

DETERMINE WHETHER LEAN OPERATION SHOULD BE PERMITTED — S11

S12 — FLB = 1? — NO

YES

S21 — CNOx > CNOxREF? — NO

YES

STOICH OR RICH OPERATION — S13

S22 — FULL-CYLINDER LEAN OPERATION

FIRST CYLINDER GROUP RICH OPERATION SECOND CYLINDER GROUP LEAN OPERATION — S31

DETERMINE ADDNH3C IN ACCORDANCE WITH DESIGNATED AIR-FUEL RATIO, NE AND PBA — S14

S34 — DETERMINE ADDNH3P IN ACCORDANCE WITH DESIGNATED AIR-FUEL RATIO, NE AND PBA

S23 — DETERMINE SUBNH3 IN ACCORDANCE WITH DESIGNATED AIR-FUEL RATIO, NE AND PBA

S35 — CNH3T ← CNH3T + ADDNH3P

S24 — CNH3C ← CNH3C - SUBNH3

CNH3C ← CNH3C + ADDNH3C — S15

NO — CNH3T > CNH3REF? — S36

S25 — CNH3C ≤ 0? — NO

LIMIT PROCESS — S16

YES

YES

S26 — CNH3C ← 0

CNOx ← 0
CNH3T ← 0
CNH3C ← CNH3CMAX — S37

DETERMINE ADDNOx IN ACCORDANCE WITH DESIGNATED AIR-FUEL RATIO, NE AND PBA — S27

CNOx ← CNOx + ADDNOx — S28

RETURN

EP 1 061 244 B1